# EUROPEAN PATENT APPLICATION

(11) **EP 2 535 885 A1**
(43) Date of publication of application: **19.12.2012**
(21) Application number: 10845625.2
(22) Date of filing: 30.12.2010
(51) Int. Cl.: G09B 7/06

(54) **CARD FOR RECORDING DATA AND/OR RESPONSES WITH OPTO-ELECTRONIC READING**

(30) Priority: 10.02.2010 ES 201030109 U
(71) Applicant: Laboratorios Jri Sistemas, S.L., 37004 Salamanca (ES)
(72) Inventor: RODRIGUES ISIDORO, Jose, E-37004 Salamanca (ES)
(74) Representative: Temino Ceniceros, Ignacio
(86) International application number: PCT/ES2010/070877
(87) International publication number: WO 2011/098637

(57) **Abstract**

Card for recording data and/or responses with opto-electronic reading, of the type of cards which include several parts or areas which allow a response to be marked and cancelled, characterized in that two parts are involved in said card, a "superficial" part and at least one "linear" part, the superficial part being compartmentalized into four areas by means of internal lines in the form of a cross, while the linear part is situated beside the superficial part, preferably below the latter.

## Description

### Object of the invention

The present invention relates to a card of the type used in systems such as exercises of multiple or alternative responses which not only allow the marking of the alternative response chosen by the user, but also the cancellation of such marking and the choice of a new option, it all in such a way that the marks made on the form constitute a spelling or indelible writing element, and can be read by an opto-electronic system that automates and mechanizes the review of this type of tests.

The object of the invention focuses on a card of the type mentioned, participating on a form, with a special determinant structure of a substantial economy of space, ease of filling and a remarkable versatility.

The invention is utilized in the application of psychometric analysis, epidemiological surveys of diverse nature, questionnaires, etc.

### Background of the invention

The practice of multiple choice exercises, in which each question corresponds to several possible answers among which that considered as valid must be selected, is fully generalized, in the same way that it is also the inclusion of cards that determine the exact areas where marks of preset configuration, which can be read and automatically registered with an opto-electronic system which facilitates the correction of the tests, with maximum reliability in the results.

Initially, the different cards participating in the form were limited to a single hollow piece, so if said card was chosen as a theoretically correct solution, it was carried out the filling of the same. In order to have the possibility of making corrections, i.e. cancel a response already made to replace it with another, it was necessary that the marking was carried out with non-permanent writing instruments, such as pencils or the like, which allow their subsequent deletion. This solution was inadequate since, even though allowed the reading of forms by means of optical electronic systems, it also allowed easy handling of tests, misrepresenting the results.

To solve this problem, forms provided with cards consisting of several parts have been used, so that the filling of a part entails the choice of a specific response, the filling of the second the cancellation of an already chosen response, and the filling of a third involves the recovery of the previously cancelled response, so the markings can be made with indelible ink that prevent the fraudulent manipulation of the tests.

However this solution raises to turn a technical problem arising from the absence of direct identification means of the meaning of such parts, or the need to relate a specific action with a pre-mark of identification, what causes that occasionally, depending on the type of card used, the results of the tests are biased for reasons unrelated to the content of the same. These reasons use to be, in the first case, elements relating to the spatial organization or organization of the body schema of each subject and involved in a meaningful way in a filling of cards which, not having differentiating elements, require a same action not especially differentiated in its orientation, for conflicting results, such as cancelling a marking and recovering it. In the second case the reasons use to be the difficulty of mentally correlating at every moment during the test an identification specified or an also specific action, such as for example a blank space to be marked, on which for example an "X" to cancel or a "O" to recover is located.

The applicant himself is holder of the Utility Models U 200401883, U 200402611, U 200402612, U 200701467, and U 200802567, all of them granted and effective, which show an evolutionary path in these recording devices for opto-electronic reading.

Specifically in the aforementioned Utility Model U 200701467 is described and claimed a device for recording responses for opto-electronic reading, of the type of which incorporate for each question several possible answers, materialized in both cards, in each of which in turn several parts participate which allow marking and cancelling a response, focusing their characteristics on the fact that in each of said cards participate three parts, one central and two ends, symmetrical, constituting three marking areas of the card, by means of subsequent filling of the same.

This solution, of fully satisfactory results in terms of recording or marking is concerned, in practice entails an important occupancy of space, because they are used in the marking of filling areas that require a relatively large surface.

In addition, the utility model U 200802567 describes a device for recording data and/or responses for opto-electronic reading, of the same type as those above-mentioned, but wherein instead of existing several laterally adjacent parts, on each card is set up a plurality of parts or concentric figures with any geometric configuration, such as for example a circle, a square, a triangle, etc., so the cited figures are initially empty, i.e. they are defined by contour lines, making a progressive shaded from the central figure, each time that a change occurs in the selected response.

This solution allows a drastic reduction in the space occupied by the marking, and a practically unlimited number of times in which change of marking can be made, but however when the number of possibilities for changing a response is high, the absence of direct utilization means of the meaning of said parts and the repetitive configuration of the same, occasionally make them difficult to identify, so that the user loses the control of marking, and having to repeat it mentally to check the final result, with the consequent loss of time involved which is usually essential in this type of tests.

### Description of the invention

The card for recording data and/or responses proposed by the invention resolves the previously exposed problems, in such a way that combines a relatively high number of possibilities for changing of marking, with a clear and immediate identification of the changes that have been made and/or can be made, which prevents both errors and loss of time.

To do so, and in a way more specific, each of the response options in a form which is the object of the invention, is structured by an alignment of identical figures, in each of which two parts are involved, one part that could be called "superficial", since a 2-dimensional form prevails, and being able to take any geometric configuration, and another "linear" as regards it is embodied in a single stroke or the like, being situated preferably under the surface part.

For its part, said superficial part is compartmentalized inwardly by means of a couple of strokes preferably perpendicular to each other.

From this basic structure it is feasible that the above-mentioned superficial and linear parts are determined by continuous or discontinuous strokes, by dotted alignments, etc., and in the same way they are of square, rectangular, circular configuration, etc.

There also provided different types of marking for a same basic figure, i.e. for the two superficial and linear parts, so that depending on the type of marking chosen is greater or minor the number of options or possibilities of change for the final answer.

### Description of the drawings

To complement the description that is being made and in order to help a better understanding of the characteristics of the invention, according to a preferred practical embodiment of the same, it is attached as an integral part of the description, a set of drawings wherein, with illustrative and non-limitative character, the following has been represented:
Figure 1 shows a first version of a card for recording data and/or responses with opto-electronic reading, carried out according to the object of the present invention.
Figure 2 shows the same card in the previous figure, but with a sequence of different changes that will suffer as the change of criterion occurs on the part of who are filling in the card.
Figure 3 shows, according to a representation similar to figure 1, three alternatives of practical embodiment for the card of the invention.
Figure 4 shows, according to a representation similar to figure 2, a different marking system that allows substantially increasing the possibilities of changing the response, without involving an increase in the space occupied by the card.
Figure 5 shows a variant of embodiment of the invention, similar to figure 4, but in which more than one linear piece participates.
Figure 6 shows some of the practically unlimited possibilities of configuration for the "superficial" part that participates in the card of the invention.

### Preferred embodiment of the invention

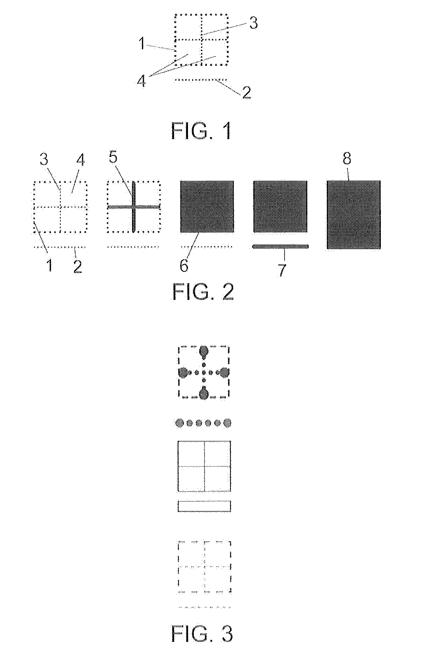

In the light of the above figures, it can be seen as the card for recording data and/or responses proposes by the invention is materialized in a figure, which will be repeated as many times as necessary in the bosom of the form, and in which a superficial part (1) and at least a lineal part (2-2'-2") are involved. The superficial part (1) can take a square configuration, shown in Figure 1 above, and will be fragmented into four internal areas by a couple of strokes in cross (3) which delimit said areas (4). For its part, the linear part (2) consists of a stroke that is situated beside the superficial part (1), preferably under the latter, with a length matching with the underside of the same.

Both the superficial part (1) and the linear part (2), may be materialized in tiny dotted lines, as in figures 1 and 2, in discontinuous or continuous lines, but of very thin strokes, as in Figure 3, or even by means of the combination of lines and dots, also shown in figure 3, within a practically unlimited range of possibilities, provided that can be done on them the necessary markings, in addition resulting these perfectly visible and defined.

From any of the cited parts, it has been provided the sequence of marking shown in Figure 2, where the acceptance of a response as valid entails the arrangement of a cross (5) on the original cross (3), a change of response entails the total filling (6) of the superficial part (1), a new change of criterion entails the thicknessed (7) of the linear part (2), and finally a last change of criterion entails the overall filling (8), of the filling (6) previously made with thicknessing (7) of the linear part (2), as shown in detail in Figure 2.

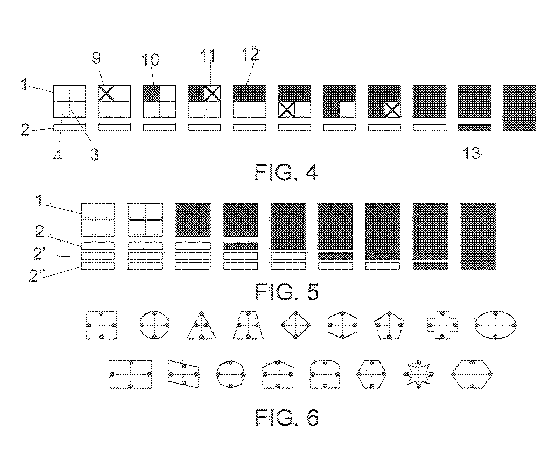

However when these possibilities of changing the response are considered insufficient, it can be used the marking system in Figure 4, in which it is started from exactly the same basic parts for the card, that is a superficial part (1) and a linear part (2), the first with its corresponding cross (3) of internal compartmentalization (4), being achieved the first marking when a blade (9) is established on the top left quadrant of the superficial part (1), the cancellation of the response by filling (10) of said blade, a new marking with another blade (11), in the event of a new change of criterion, now in the top right quadrant of the superficial part, filling (12) of said blade in the event of a new criterion for cancellation, and so on until all four quadrants of the superficial part (1) are completed, after which a filling (13) of the linear part (2) will occur, in the event of existing a new and complementary final change of criterion, and in the case of existing a definitive criterion for validation of the response, the overall filling (14) of both superficial (1) and linear (2) parts.

In this way and with the same type of card are feasible two markings and two cancellations, as in the case of Figure 2, or five markings and five cancellations, as in the case of Figure 4, depending on the marking system chosen, and in any case with a card of minimum dimensions on which both the markings and cancellations are very easy to follow, in the absence of errors of interpretation.

## Claims

1. Card for recording data and/or responses with opto-electronic reading, of the type of cards which include several parts or areas which allow a response to be marked and cancelled, **characterized in that** two parts are involved in said card, a "superficial" part and at least one "linear" part, the superficial part being compartmentalized into four areas by means of internal lines in the form of a cross, while the linear part is situated beside the superficial part, preferably below the latter.

2. Card for recording data and/or responses with opto-electronic reading, according to the claim 1, **characterized in that** the superficial part is susceptible of taking in general a circular, square, or polygonal configuration, in which bosom the aforementioned internal lines determine four quadrants, one top left, another bottom right, a third bottom left and another bottom right.

3. Card for recording data and/or responses with opto-electronic reading, according to the preceding claims, **characterized in that** both the superficial part and the linear part are defined by continuous strokes or dashed strokes, dotted alignments or any other type of tracing that allows the easy identification of the strokes or fillings made on such parts.
